# EUROPEAN PATENT APPLICATION

(11) **EP 2 538 721 A1**
(43) Date of publication of application: **26.12.2012**
(21) Application number: 11305789.7
(22) Date of filing: 22.06.2011
(51) Int. Cl.: H04W 36/14, H04W 84/12, H04W 76/02, H04W 36/00, H04W 76/04

(54) **Support of IP connections over trusted non-3GPP access**

(71) Applicant: Alcatel Lucent, 75007 Paris (FR)
(72) Inventor: Henderickx, Wim, B - 2260 Westerlo (BE); Derksen, Daniel, 2512 EE Den Haag (NL); Thiebaut, Laurent, 91620 NOZAY (FR); Van De Velde, Thierry, 1860 Meise (BE)
(74) Representative: El Manouni, Josiane

(57) **Abstract**

In an embodiment, there is provided a method for the support of IP connections for a User Equipment UE having access to a 3GPP Core Network CN via at least a trusted non-3GPP Access Network AN that does not support Layer 2 signalling and bearer per IP connection, said method comprising:
- providing that traffic carried by an IP connection is tunnelled over said AN, through a Layer-2 tunnel associated with said IP connection.

## Description

The present invention generally relates to communication networks and systems, such as in particular mobile communication networks and systems.

Descriptions of mobile communication networks and systems can be found in the literature, such as in particular in Technical Specifications published by standardization bodies such as for example 3GPP (3^{rd} Generation Partnership Project).

In general, in such mobile communication systems, a terminal (also called User Equipment UE) has access to communication services (including basic services such as in particular providing IP connectivity) via a network comprising a Core Network CN accessed by an Access Network AN.

An example of 3GPP-based mobile communication system is Evolved Packet System EPS, a description of which can be found in particular in 3GPP TS 23.401 and 3GPP TS 23.402. There are of course other examples of communication systems, including systems specified by standardization bodies other than 3GPP.

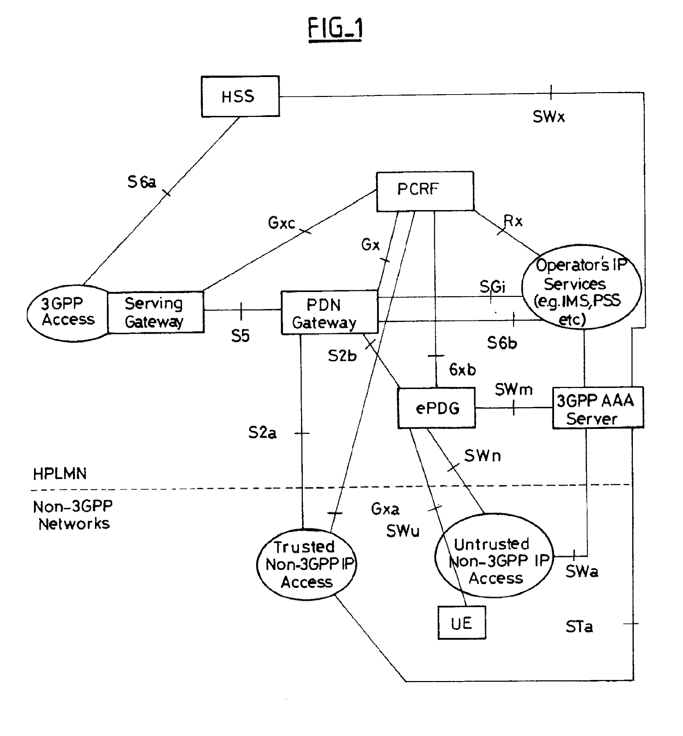

A system such as for example EPS includes Evolved Packet Core EPC that can be accessed by various Access Networks, including 3GPP Access Networks and non-3GPP Access Networks. Examples of 3GPP Access Networks include E-UTRAN, UTRAN, GERAN, ...etc. Examples of non-3GPP Access Networks include WiFi Access Network (specified by IEEE, in particular in 802.11 specifications), WiMAX Access Network (specified by IEEE, in particular in 802.16 specifications). An example of architecture for EPS including 3GPP and non-3GPP Access Networks is recalled in figure 1, taken from 3GPP TS 23.402.

In a system such as for example EPS, an IP connection, also called PDN connection, is defined as an association between a User Equipment UE represented by one IPv4 address and/or one IPv6 prefix and an IP network, also called Packet Data Network PDN, represented by an Access Point Name APN. Examples of PDNs include public Internet, Intranet, operator's IMS network...etc.

Different interfaces may be used in a system such as for example EPS, as defined in particular in 3GPP TS 23.402:
- S2a: providing the user plane with related control and mobility support between trusted non-3GPP Access Network and PDN Gateway P-GW ,
- S2b: providing the user plane with related control and mobility support between ePDG and PDN Gateway P-GW (ePDG interfacing with untrusted non-3GPP Access),
- S2c: providing the user plane with related control and mobility support between UE and PDN Gateway P-GW; S2c may be implemented over trusted and/or untrusted non-3GPP Access and/or 3GPP Access.

There is a need to improve support of IP connections in such systems, especially over trusted non-3GPP Access, as recognized by the inventors and as will be explained later with more detail.

For example, a requirement in such systems is the support of multiple PDN connections (enabling a user to have access simultaneously to multiple PDNs such as for example Internet, corporate intranet...etc.). However, as recognized by the inventors, problems may arise for such support, especially over a trusted non-3GPP Access that does not support Layer 2 signalling and bearer per IP connection, so that such requirement may not always be fulfilled. There is a need to solve such problems and/or avoid such drawbacks.

As another example, as recognized by the inventors, it would be beneficial to provide a kind of Local IP Access service in such systems, especially over a trusted non-3GPP Access that does not support Layer 2 signalling and bearer per IP connection. This would in particular allow more attractive services for users, as well as more efficient use of network resources for operators.

More generally, there is a need to improve such communication systems and/or communication services provided by such systems, especially over a trusted non-3GPP access that does not support Layer 2 signalling and bearer per IP connection.

Embodiments of the present invention in particular address such needs.

A WLAN access such as defined by IEEE 802.11 is an example of a trusted non-3GPP access that does not support Layer 2 signalling and bearer per IP connection.

These and other objects are achieved, in one aspect, by a method for the support of IP connections for a User Equipment UE having access to a 3GPP Core Network CN via at least a trusted non-3GPP Access Network AN that does not support Layer 2 signalling and bearer per IP connection, said method comprising:
- providing that traffic carried by an IP connection is tunnelled over said AN, through a Layer-2 tunnel associated with said IP connection.

These and other objects are achieved, in another aspect, by a method for the support of IP connection for a User Equipment UE having access to a 3GPP Core Network CN via at least a trusted non-3GPP Access Network AN that does not support Layer 2 signalling and bearer per IP connection, said method comprising, for access by the UE to an host connected to a local network to which a non-3GPP AN node is also connected by a local link:
- providing that traffic carried by said IP connection is switched locally, without said traffic being served by said 3GPP CN.

These and other objects are achieved, in other aspects, by entities for performing such method(s), said entities including in particular: User Equipment UE, and non-3GPP AN nodes, such as in particular non-3GPP AN Edge Router and non-3GPP AN Access Point.

Some embodiments of apparatus and/or methods in accordance with embodiments of the present invention are now described, by way of example only, and with reference to the accompanying drawings, in which:
- Figure 1 is intended to recall an example of architecture for EPS,
- Figure 2 is intended to illustrate, in a simplified way, an example of system wherein some embodiments of the present invention may be used,
- Figure 3 is intended to illustrate, in a simplified way, some signaling and/or traffic flows for the support of multiple PDN connections over non-3GPP access, according to some embodiments of the present invention,
- Figure 4 is intended to illustrate, in a simplified way, an example of system wherein some other embodiments of the present invention may be used,
- Figure 5 is intended to illustrate, in a simplified way, some signaling and/or traffic flows for the support of a local IP access service over trusted non-3GPP access, according to some other embodiments of the present invention.

In the following, embodiments of the present invention will more particularly be disclosed, by way of example only, for the case of 3GPP CN corresponding to EPC, and for the case of non-3GPP AN corresponding to WiFi. Other examples are of course possible, as understood by the skilled person.

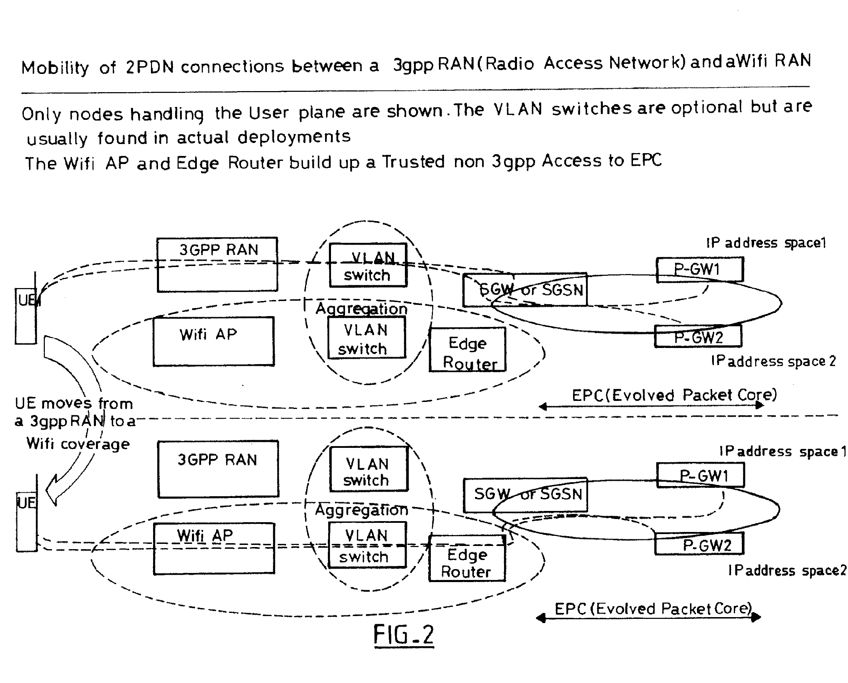

By way of example, in the system illustrated in figure 2, an User Equipment UE has access to EPC over 3GPP and non-3GPP accesses. Figure 2 illustrates:
- User Equipment UE,
- Evolved Packet Core EPC (including 3GPP CN nodes, such as, in the illustrated example, PDN Gateway P-GW, and Serving Gateway SGW or Serving GPRS Support Node SGSN),
- 3GPP Radio access Network,
- Non-3GPP Access Network AN, e.g. WiFi Access Network in the illustrated example.

The 3GPP CN nodes, such as, in the illustrated example, PDN Gateway P-GW, and Serving Gateway SGW or Serving GPRS Support Node SGSN are defined in 3gpp 23.401 and 3GPP 23.060.

By way of example, the system illustrated in figure 2 supports multiple PDN connections via two P-GWs, noted P-GW1 and P-GW2.

Following terms are used:
- an UE (3gpp User Equipment) is a mobile device that supports a 3gpp radio (that may be 2G, 3G, LTE or any Radio that 3gpp may define) and a non 3gpp radio and that is equipped with an (U)SIM
- "PDN connection" is used to refer to either a PDN connection (EPC terminology) or to a PDP context (legacy 3G terminology). PDP contexts and PDN connections are defined in 3gpp 23.060 and 23.401. They correspond to an IP Connectivity provided to an UE by a 3gpp network
- HPLMN stands for Home PLMN i.e. the PLMN with which the end-user has got a subscription

An underlying network architecture is shown in figure 2: to support Wifi access to EPC (Evolved Packet Core), following nodes are deployed (that collectively make up a" trusted Wifi access to EPC"
- A collection of Wifi Access Points (Wifi AP) supporting the Wifi Radio. Those access points may be controlled by an Access controller
- An Edge Router acting as the first hop router as seen from the UE. This Edge Router (also called WLAN Gateway) maps between the UE signaling for IP connectivity (e.g. DHCP requests) and the EPC (Evolved Packet Core) Intermediate Layer 2 (Ethernet) switches capable of VLAN (IEEE 802.1q) handling may connect the Wifi AP with the Edge Router

Currently an UE that supports multiple PDN connection / PDP context over a 3gpp radio access, and that moves from a 3gpp radio access to a non 3gpp Wifi access needs to either
- loose this capability of multiple IP services / access to multiple P-GW/GGSN over the EPC
- Or use layer 3 tunneling techniques over Wifi to keep this capability of multiple IP services / access to multiple P-GW/GGSN over the EPC. The issue with the Layer 3 tunneling techniques currently defined is that they require complex capabilities
   ο either supporting an IPSec tunnel (established over IKEv2) per PDN connection. This is referred to "access over non Trusted non 3gpp access" or "using S2b" in 3gpp terminology (TS 23.402)
   o or supporting a DSMIPv6 (IETF RFC 5555) per PDN connection. This is referred to "Host Based Mobility to non 3gpp access" or "using S2c" in 3gpp terminology (TS 23.402)

When an UE is camping over a Wifi radio that can be considered as "trusted" (by the Home PLMN of the user), a more lightweight means is required to bring the capability for an UE to request many IP address on a Wifi radio in order to benefit from multiple simultaneous IP services as over a 3gpp radio.
- each of these IP address may correspond to a different mobile network service (APN - Access Point Name - as defined in 3gpp 23.401 and 23.060)
- With possibly overlapping IP address, i.e. with the network possibly providing an UE with the same value of the private IPv4 @ allocated on simultaneous IP services established over Wifi for this UE, each of these IP address corresponding to a different APN
   o (The P-GW in the network don't synchronize themselves on the IP address they allocate. Thus when private IPv4 @ are allocated to an UE on different APN, nothing prevents the P-GW responsible of the different APN to allocate by "bad chance" the same private IPv4 @ to an UE)

An example of UE that over non 3gpp would need more than one PDN connection is an UE that would need a PDN connection to access to its corporate VPN and another PDN connection to access to basic Internet.

Current solutions include:
o either supporting an IPSec tunnel (established over IKEv2) per PDN connection. This is referred to "access over non Trusted non 3gpp access" or "using S2b" in 3gpp terminology (TS 23.402)
o or supporting a DSMIPv6 (IETF RFC 5555) per PDN connection. This is referred to "Host Based Mobility to non 3gpp access" or "using S2c" in 3gpp terminology (TS 23.402)

The IPSec solution is costly in the network (need to support a PDG/ePDG per 3gpp 23.234/23.402). The cost is due to the need of supporting a high number of ciphering context in the PDG/ePDG. Furthermore the IPSec based solution renders UE access to a corporate VPN over Wifi difficult as it imposes to have "nested" IPSec tunnels (the IPSec tunnel for the corporate VPN is included in the IPSec tunnel to access the PDG/ePDG).

The DSMIPv6 (IETF RFC 5555) solution requires a DSMIPv6 client in the UE even though the UE is only intended for IPv4 and requires again a lot of IPSec terminations in the network (this time in the Home Agent) as DSMIPv6 requires an underlying IPSec tunnel to protect its signaling.

In other words:
Current solutions allowing Access to EPC over a non 3gpp access for multiple PDN connections require
   o either supporting an IPSec tunnel (established over IKEv2) per PDN connection.
   o or supporting a DSMIPv6 (IETF RFC 5555) per PDN connection.

Both require a specific UE implementation /client and costly nodes in the network (that need to terminate one IPSec tunnel and/or one DSMIP tunnel per UE). The small charge an operator can require from an user accessing to IP services over Wifi, is not really compatible with the cost of these nodes in the network.

A solution allowing an UE to request an IP address associated with an APN on a Wifi link is disclosed in document "DHCP options for Access point Name and attach type indication" draft-patil-dhc-apn-attachtype-options-01.txt.

This document specifies a new DHCP option which enables the mobile node to request connectivity to a gateway, identified by the access point name, in DHCP messages. This option enables the host to indicate the access point name to which the connection needs to be established with and whether the connection being established is the handover from another access network or a new attachment.

Nothing prevents the UE from issuing multiple time such a DHCP request over a Wifi link in order to request from the network the allocation of an IP address in association with a specific APN. This would allow the UE to get multiple IP address from the network, each associated with a given APN. The point is that if the U E is allocated the same private IPv4 @ in association with different APN, without any tunneling technique between the UE and the network, the network is not able to determine the APN to associate with an Uplink packet sent by the UE.

Another solution would be for the UE to establish as many Wifi connections as it wants to have simultaneous IP services (PDN connections handed-over from 3gpp radio to Wifi). This would require hardware changes on the UE and is thus a too costly solution.

Embodiments of the present invention in particular enable to solve such problems and/or avoid such drawbacks.

In an embodiment, it is proposed:
a. To rely on the UE signaling the target APN corresponding to a request for an IP address via a DHCP request sent over Wifi. The DHCP request contains the target APN in a new DHCP element (per a solution similar to the one described in the above-mentioned document "DHCP options for Access point Name and attach type indication" draft-patil-dhc-apn-attachtype-options-01.txt).
b. To use VLAN to deal with the case where 2 P-GW would by "chance" allocate the same (private) IP address to the same UE (on different APN). VLAN are used over a Wifi link as a layer 2 tunneling to allow the network to disambiguate the various PDN connections of an UE: the UE associate one VLAN tag with a PDN connection.

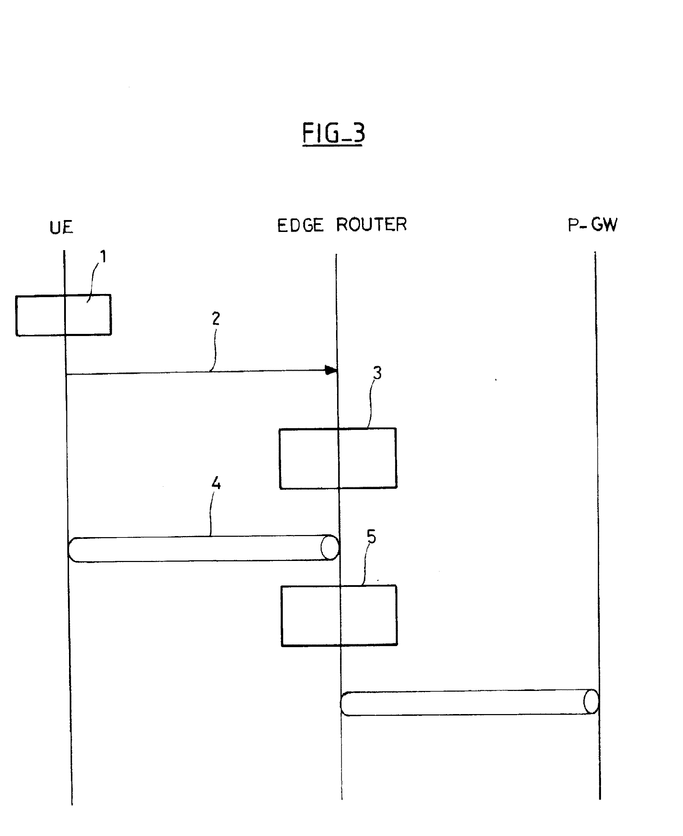

In an embodiment following steps may be provided as illustrated in a simplified way in figure 3:
a. UE signals the target APN via a DHCP request sent over Wifi as illustrated at step 2. The DHCP request contains the target APN in a new DHCP element such as proposed in the above-mentioned document "DHCP options for Access point Name and attach type indication" draft-patil-dhc-apn-attachtype-options-01.txt.
   i. This means that at mobility to a trusted Wifi link the UE may decide to hand-over (with IP address preservation) all or part of all the PDN connections it had over 3gpp or even to establish new PDN connections. The UE sends as many DHCP requests as PDN connections it wants to have over the trusted Wifi Access
b. VLAN are further used to deal with the case where 2 P-GW would by « chance" allocate the same (private) IP address to the same user (on different APN).
   i. Traffic targeting a given APN is sent by the UE over a VLAN (Virtual Local Area Network defined in IEE 802.1q) dedicated to this APN, as illustrated at step 4. The VLAN tag is chosen by the UE (as illustrated at step 1) and VLAN is used over the Wifi 802.11 link.
   ii. The DHCP request for a given APN is sent over this VLAN (as illustrated at step 2) and/or contains the VLAN tag the UE wants to associate with this APN
   iii. the (Wifi) AP acts as a bridge that forwards IP/VLAN/Ethernet back and forth between the UE and the Edge Router (WLAN GW) interfacing the EPC (Evolved Packet Core) and thus relays at layer 2 the DHCP requests received on a VLAN without knowing it is a DHCP request, i.e. the Wifi AP is be aware that multiple DHCP requests are sent on the same 802.11 Wifi link
   iv. There is no ambiguity issue (even when 2 APN / PDN connections would be giving the same IP address to the UE) on the network side as
      - The Edge Router (WLAN GW) interfacing the EPC associates a DHCP request with the VLAN on which the DHCP request has been received(as illustrated at step 3)
      - The Edge Router (WLAN GW) interfacing the EPC maps between a VLAN "tunnel" (towards the UE) and a GTP tunnel towards the P-GW/GGSN (like a SGW would do between 2 GTP tunnels) (as illustrated at step 5)
   v. In order for the VLAN values selected by the UE (and used over the Wifi link) not to interfere with the VLAN values used by intermediate switches between the AP and the Edge Router (WLAN GW) interfacing the EPC, double-tagging per WLAN IEEE 802.1ad is used. Double-tagging per WLAN IEEE 802.1ad is used as follows:
      - the VLAN tag used by the UE (over the Wifi link) is put in the inner C-TAG (customer tag) over the backhaul link
      - VLAN tags used between the Wifi AP and the Edge Router (WLAN GW) interfacing the EPC are carried over the outer STAG (service tag)
      There is no issue when 2 UE would allocate the same C-Tag value as the tunnel towards the UE is also identified by the MAC address of the UE (assumed to be all different).
      Intermediate switches en - route between the AP and the Edge Router are not bothered by the inner tags allocated by the UE.
      The way the UE allocates this Inner tag associated with an APN is an implementation issue
c. Locally within the UE, IP aliasing is used to have the various VLAN appear as different links of the UE by creating virtual links (per VLAN) that are mapped on the same actual physical link (the Wifi radio).

In another aspect, in an embodiment, it is proposed to provide local switching for UE connected to their residential or corporate Wifi: in this case, in an embodiment, the UE may want to access to hosts in the local LAN reachable via the Wifi link, without the traffic being served by the EPC or the Edge Router. This provides a kind of LIPA service (Local IP Access) such as defined in 3gpp TS 23.060 or 23.401.

This may be e.g. to access the local printer or the RGW (Residential Gateway) at home in case of a residential Wifi/WLAN or the web proxy exchange in case of a corporate WifiM/LAN.

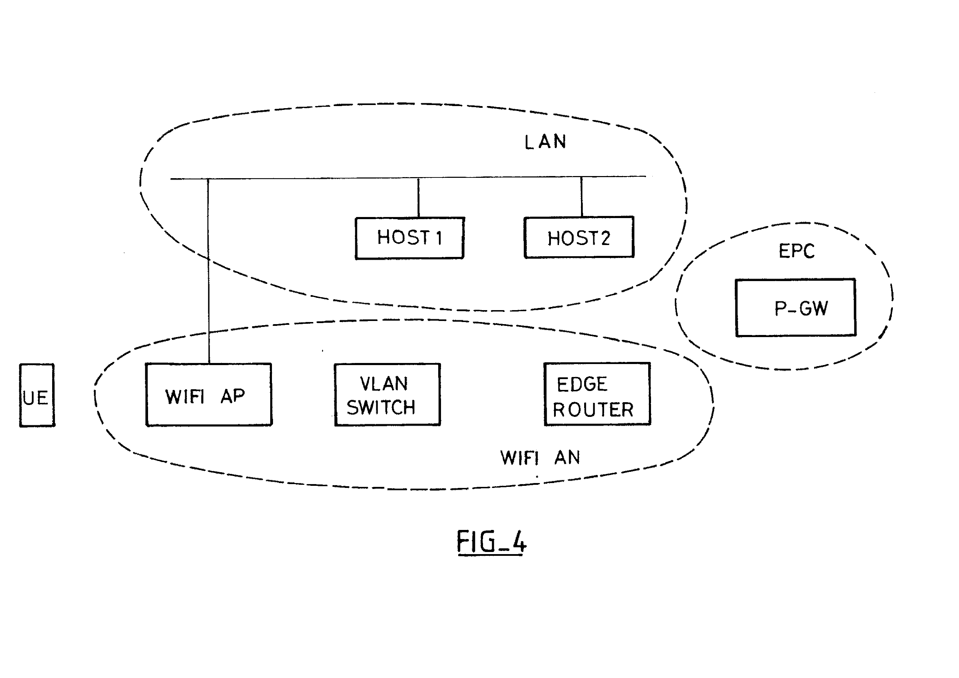

Figure 4 illustrates an example of local network LAN. In this example, hosts such as for example Host1 and Host2 are connected to this local network. In this example, a Wifi AP is also connected to this local network, by a local link noted LL.

An example of WLAN/Wifi AP that may enforce access to a Local LAN is the WLAN/Wifi AP imbedded in a Residential Gateway (RGW) terminating a residential DSL line.

The figure depicts only an example of network lay-out. Depending on the way the WLAN/Wifi service is deployed, the local network LAN may not be connected directly on a WLAN/Wifi AP but on a WLAN switch or a WLAN access concentrator.

For many corporate WLAN/Wifi deployments access to a Local LAN is not provided in the WLAN/Wifi AP but in a WLAN related switch.

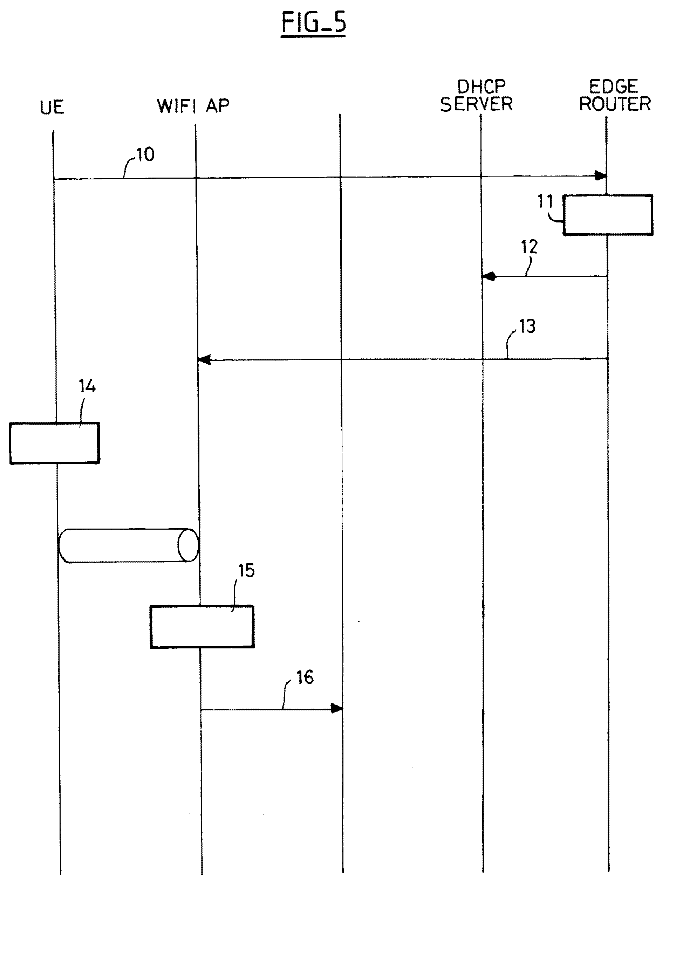

In an embodiment, a way to provide this service may be as follows, as illustrated in a simplified way in figure 5:
- For traffic sent on UE VLAN associated with non-LIPA APN ("normal case") the Edge Router ( or the P-GW reached via the Edge Router) acts as the default router of the UE. All the traffic on such VLAN is to be switched towards the Edge Router. This is the default behavior of the system
- When the UE requires (as illustrated at step 10) via relevant signaling (such as via DHCP) an IP address for an APN that the Edge Router can detect (as illustrated at step 11) as associated with a LIPA service, the Edge Router
   o Redirects the DHCP request to a DHCP server co-located with the Wifi AP or to be reached on the local LAN via the Wifi AP (as illustrated at step 12). This ensures that the UE gets a local (residential / corporate) IP address on this APN
   o instructs (as illustrated at step 13) the Wifi AP to associate (as illustrated at step 15) the couple of (UE MAC address, VLAN tag allocated as illustrated at step 14 by the UE) with a traffic offload policy that makes the Wifi AP and/or local switch route the traffic to a local link and not towards the Edge Router (as illustrated at step 16)
      The detection by the Edge Router that an APN is associated with LIPA service may be based on local settings on the Edge Router or based on AAA instructions received from a AAA server of the HPLMN.

All the mechanisms defined above are also applicable to other non-3GPP access links than Wifi such as Wimax. The non-3GPP Access should be considered as a "trusted access to EPC" by the HPLMN of the operator.

In one aspect, there is provided a method for the support of IP connections for a User Equipment UE having access to a 3GPP Core Network CN via at least a trusted non-3GPP Access Network AN that does not support Layer 2 signalling and bearer per IP connection, said method comprising:
- providing that traffic carried by an IP connection is tunnelled over said AN, through a Layer-2 tunnel associated with said IP connection.

In an embodiment, said method comprises:
- providing that traffic carried by an IP connection is tunnelled over said AN, through a Layer-2 tunnel associated with an Access Point Name APN for said IP connection.

In an embodiment, said method comprises:
- a non-3GPP AN node mapping said Layer-2 tunnel with a Layer-3 tunnel through which said traffic is tunnelled over said CN.

In an embodiment, said method comprises:
- providing that traffic carried by an IP connection is tunnelled over said AN over a VLAN associated per UE with said IP connection.

In an embodiment, said method comprises:
- providing that traffic carried by an IP connection is tunnelled over said AN over a VLAN associated per UE with an Access point Name APN for said IP connection.

In an embodiment, said method comprises:
- the UE allocating a VLAN tag,
- the UE sending said traffic over a VLAN identified by said VLAN tag.

In an embodiment, said method comprises:
- the UE signalling an allocated VLAN tag.

In an embodiment, said method comprises:
- the UE allocating a VLAN tag,
- the UE signalling an Access Point Name for said IP connection, over a VLAN identified by an allocated VLAN tag,
- the UE sending said traffic over said VLAN.

In an embodiment, said method comprises:
- a non-3GPP AN node determining a VLAN tag allocated by the UE, from signalling sent by the UE.

In an embodiment, said method comprises:
- a non-3GPP AN node determining a VLAN over which traffic is to be received from the UE, as corresponding to a VLAN over which an Access Point Name APN for said IP connection has been signalled by the UE.

In an embodiment, said method comprises:
- signalling sent by the UE includes a request for an IP address.

In an embodiment, said method comprises:
- a non-3GPP AN node receiving said traffic tunnelled through said Layer-2 tunnel and/or said signalling from the UE corresponding to a non-3GPP AN Edge Router.

In another aspect, there is provided a method for the support of IP connection for a User Equipment UE having access to a 3GPP Core Network CN via at least a trusted non-3GPP Access Network AN that does not support Layer 2 signalling and bearer per IP connection, said method comprising, for access by the UE to an host connected to a local network to which a non-3GPP AN node is also connected by a local link:
- providing that traffic carried by said IP connection is switched locally, without said traffic being served by a non-3GPP AN Edge Router and/or by said 3GPP CN.

In an embodiment, said method comprises:
- the UE including an Access Point Name APN indicating that said traffic is to be switched locally, in a request for an IP address sent by said UE.

In an embodiment, said method comprises:
- a non-3GPP AN node receiving a request for an IP address sent by the UE and including an Access Point Name APN indicating that said traffic is to be switched locally, redirecting said request to an IP address server ensuring that the UE gets a local IP address for this APN.

In an embodiment, said method comprises:
- a non-3GPP AN node receiving a request for an IP address sent by the UE and including an Access point Name APN indicating that said traffic is to be switched locally, and detecting that said local switching is authorized for the UE, instructing a non-3GPP node receiving said traffic, to switch said traffic locally.

In an embodiment, said method comprises:
- a non-3GPP AN node detecting that local switching is authorized for the UE, from local settings in said non-3GPP AN node.

In an embodiment, said method comprises:
- a non-3GPP AN node detecting that local switching is authorized for the UE, from signalling received from a 3GPP AAA Server.

In an embodiment, said method comprises:
- the UE allocating a VLAN tag,
- the UE sending said traffic over a VLAN identified by said VLAN tag.

In an embodiment, said method comprises:
- a non-3GPP AN node instructed to switch said traffic locally, identifying said traffic by a couple formed of an UE MAC address and a VLAN tag allocated by the UE.

In an embodiment, said method comprises:
- a non-3GPP AN node instructed to switch said traffic locally switching said traffic to said local link.

In an embodiment, said method comprises:
- a non-3GPP AN node receiving a request for an IP address for the UE, and/or detecting that local switching is authorized by the UE, and/or instructing a non-3GPP AN node to switch said traffic locally, corresponds to a non-3GPP AN Edge Router.

In an embodiment, said method comprises:
- a non-3GPP AN node instructed to switch traffic locally and/or switching said traffic to said local link, corresponding to a non-3GPP AN Access Point AP.

In another aspect, there is provided a User Equipment comprising means for performing such method.

In another aspect, network entities are provided comprising means for performing such method(s), said entities including in particular non-3GPP AN nodes, such as in particular: non-3GPP AN Edge Router and non-3GPP AN Access Point.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for the support of IP connections for a User Equipment UE having access to a 3GPP Core Network CN via at least a trusted non-3GPP Access Network AN that does not support Layer 2 signalling and bearer per IP connection, said method comprising:
- providing that traffic carried by an IP connection is tunnelled over said AN, through a Layer-2 tunnel associated with said IP connection.

2. A method according to claim 1, comprising:
- providing that traffic carried by an IP connection is tunnelled over said AN, through a Layer-2 tunnel associated with an Access Point Name APN for said IP connection.

3. A method according to claim 1 or 2, comprising:
- a non-3GPP AN node mapping said Layer-2 tunnel with a Layer-3 tunnel through which said traffic is tunnelled over said CN.

4. A method according to any of claims 1 to 3, comprising:
- providing that traffic carried by an IP connection is tunnelled over said AN over a VLAN associated per UE with said IP connection.

5. A method according to any of claims 1 to 4, comprising:
- providing that traffic carried by an IP connection is tunnelled over said AN over a VLAN associated per UE with an Access point Name APN for said IP connection.

6. A method according to any of claims 1 to 5, comprising:
- the UE allocating a VLAN tag,
- the UE sending said traffic over a VLAN identified by said VLAN tag.

7. A method according to any of claims 1 to 6, comprising:
- the UE signalling an allocated VLAN tag.

8. A method according to any of claims 1 to 7, comprising:
- the UE allocating a VLAN tag,
- the UE signalling an Access Point Name for said IP connection, over a VLAN identified by an allocated VLAN tag,
- the UE sending said traffic over said VLAN.

9. A method according to any of claims 1 to 8, comprising:
- a non-3GPP AN node determining a VLAN tag allocated by the UE, from signalling sent by the UE.

10. A method according to any of claims 1 to 9, comprising:
- a non-3GPP AN node determining a VLAN over which traffic is to be received from the UE, as corresponding to a VLAN over which an Access Point Name APN for said IP connection has been signalled by the UE.

11. A method according to any of claims 1 to 10, wherein:
- signalling sent by the UE includes a request for an IP address.

12. A method according to any of claims 1 to 11, wherein:
- a non-3GPP AN node receiving said traffic tunnelled through said Layer-2 tunnel and/or said signalling from the UE corresponding to a non-3GPP AN Edge Router.

13. A method for the support of IP connection for a User Equipment UE having access to a 3GPP Core Network CN via at least a trusted non-3GPP Access Network AN that does not support Layer 2 signalling and bearer per IP connection, said method comprising, for access by the UE to an host connected to a local network to which a non-3GPP AN node is also connected by a local link:
- providing that traffic carried by said IP connection is switched locally, without said traffic being served by said 3GPP CN.

14. A method according to claim 13, comprising:
- the UE including an Access Point Name APN indicating that said traffic is to be switched locally, in a request for an IP address sent by said UE.

15. A method according to claim 13 or 14, comprising:
- a non-3GPP AN node receiving a request for an IP address sent by the UE and including an Access Point Name APN indicating that said traffic is to be switched locally, redirecting said request to an IP address server ensuring that the UE gets a local IP address for this APN.

16. A method according to any of claims 13 to 15, comprising:
- a non-3GPP AN node receiving a request for an IP address sent by the UE and including an Access point Name APN indicating that said traffic is to be switched locally, and detecting that said local switching is authorized for the UE, instructing a non-3GPP node receiving said traffic, to switch said traffic locally.

17. A method according to any of claims 13 to 16, comprising:
- a non-3GPP AN node detecting that local switching is authorized for the UE, from local settings in said non-3GPP AN node.

18. A method according to any of claims 13 to 17, comprising:
- a non-3GPP AN node detecting that local switching is authorized for the UE, from signalling received from a 3GPP AAA Server.

19. A method according to any of claim 13 to 18, comprising:
- the UE allocating a VLAN tag,
- the UE sending said traffic over a VLAN identified by said VLAN tag.

20. A method according to any of claims 13 to 19, comprising:
- a non-3GPP AN node instructed to switch said traffic locally, identifying said traffic by a couple formed of an UE MAC address and a VLAN tag allocated by the UE.

21. A method according to any of claims 13 to 20, comprising:
- a non-3GPP AN node instructed to switch said traffic locally switching said traffic to said local link.

22. A method according to any of claims 13 to 21, wherein:
- a non-3GPP AN node receiving a request for an IP address for the UE, and/or detecting that local switching is authorized by the UE, and/or instructing a non-3GPP AN node to switch said traffic locally, corresponds to a non-3GPP AN Edge Router.

23. A method according to any of claims 13 to 22, wherein:
- a non-3GPP AN node instructed to switch traffic locally and/or switching said traffic to said local link, corresponding to a non-3GPP AN Access Point AP.

24. A User Equipment UE, comprising means for performing a method according to any of claims 1 to 23.

25. A non-3GPP AN node, comprising means for performing a method according to any of claims 1 to 23.
